# EUROPÄISCHE PATENTANMELDUNG

(11) **EP 4 675 912 A1**
(43) Veröffentlichungstag der Anmeldung: **07.01.2026**
(21) Anmeldenummer: 24185631.9
(22) Anmeldetag: 01.07.2024
(51) Int. Cl.: H02P 9/48, F03D 7/02, H02P 21/00, H02P 21/14, H02P 25/022

(54) **VERFAHREN ZUM STEUERN EINES SYNCHRONGENERATORS EINER WINDENERGIEANLAGE**

(71) Anmelder: Wobben Properties GmbH, 26607 Aurich (DE)
(72) Erfinder: Malekian Boroujeni, Kaveh, 28201 Bremen (DE); Antons, Jochen, 04315 Leipzig (DE)
(74) Vertreter: Eisenführ Speiser

(57) **Zusammenfassung**

Verfahren zum Steuern eines Synchrongenerators einer Windenergieanlage, wobei zum Ansteuern des Synchrongenerators vorläufige Stromsollwerte mittels einer Stromvorgabeeinrichtung zum Einstellen eines vorläufigen Arbeitspunktes vorgegeben werden, die von der Stromvorgabeeinrichtung vorgegebenen vorläufigen Stromsollwerte durch Korrekturwerte in modifizierte Stromsollwerte verändert werden, um den vorläufigen Arbeitspunkt zu optimieren, wobei eine Anpassungseinrichtung die Korrekturwerte durch eine Anpassungsvorschrift der Anpassungseinrichtung bestimmt, und die modifizierten Stromsollwerte zum Ansteuern des Synchrongenerators verwendet werden, um einen modifizierten Arbeitspunkt einzustellen.

## Beschreibung

Die vorliegende Erfindung betrifft ein Verfahren zum Steuern eines Synchrongenerators einer Windenergieanlage und die vorliegende Erfindung betrifft auch eine entsprechende Windenergieanlage.

Windenergieanlagen sind bekannt, sie erzeugen elektrische Leistung aus Wind und verwendet dafür einen elektrischen Generator. Gemäß einem Konzept kann als Generator ein Synchrongenerator verwendet werden, der einen Wechselstrom erzeugt, nämlich einen Statorstrom, der zum Einspeisen in ein elektrisches Versorgungsnetz mit einem sogenannten Vollumrichter gleichgerichtet und dann zum Einspeisen in das elektrische Versorgungsnetz wieder wechselgerichtet wird, um dadurch zum Einspeisen in das elektrische Versorgungsnetz insbesondere Frequenz und Phase einzustellen. Dadurch kann eine Entkopplung zwischen Generator und elektrischem Versorgungsnetz erreicht werden. Beim aktiven Gleichrichten wird der Generator gesteuert und kann dadurch in einem möglichst optimalen Arbeitspunkt betrieben werden.

Bei Windenergieanlagen mit solchen Vollumrichtern, die auch als B2B-Umrichter bezeichnet werden, kann der Arbeitspunkt des Generators durch ein Submodul im Regelungssystem bestimmt werden. Das Submodul kann synonym auch als Arbeitspunktmodul bezeichnet werden. Ein solches Submodul bzw. von dem Submodul verwendetes Verfahren kann auch als MEPA (Maximum Efficiency Per Ampere) bezeichnet werden. Zum Bestimmen des Arbeitspunktes können der Sollstrom des Stators bzw. des generatorseitigen Umrichters in d/q-Koordinaten sowie, im Falle eines fremderregten Generators, der Sollerregerstrom festgelegt werden. Durch die Festlegung dieser Größen, nämlich I_{d}, I_{q} und gegebenenfalls Iₑ können die Verluste in verschiedenen Bereichen beeinflusst werden.

Bei der Festlegung dieser Größen werden somit entsprechende Sollwerte für diese Größen vorgegeben bzw. festgelegt. Bei der Festlegung dieser Sollwerte versucht das Arbeitspunktmodul einen Arbeitspunkt für den Generator mit möglichst hohem Wirkungsgrad zu realisieren. Der Erfolg hierbei hängt mit der Genauigkeit des Modells, welches bei den Berechnungen dem Arbeitspunktmodul zugrunde liegt, zusammen.

Somit kann hier das Problem auftreten, dass Ungenauigkeiten des zugrunde gelegten Modells zu einem nicht optimalen Arbeitspunkt führen können, und damit zu Ertragsverlust.

Es wurde erkannt, dass folgende Quellen der Ungenauigkeit im Arbeitspunktmodul vorliegen können:
- Umrichter-, DC-DC-Steller-, Kabel- und Drosselverluste können unberücksichtigt bleiben und dadurch Quellen der Ungenauigkeit sein.
- Eine Abhängigkeit der Induktivitäten vom Luftspalt, infolge von Temperaturveränderung, kann unberücksichtigt bleiben und dadurch zu einer Ungenauigkeit führen.
- Fertigungstoleranzen, die zu Parameteränderungen führen können, können unberücksichtigt bleiben und dadurch zu Ungenauigkeiten führen.
- Alterungseffekte können unberücksichtigt bleiben und damit zu Ungenauigkeiten führen.
- Oberschwingungsverluste können unberücksichtigt bleiben und dadurch zu Ungenauigkeiten führen.

Aufgrund der genannten Ungenauigkeitsquellen besteht die Gefahr, dass ein bestmöglicher Arbeitspunkt hinsichtlich der Gesamtverluste im Einflussbereich des Arbeitspunktmoduls nicht fehlerfrei festgelegt werden kann. Das könnte somit zu zumindest teilweise vermeidbaren Ertragsverlusten führen.

Der vorliegenden Erfindung liegt somit die Aufgabe zugrunde, zumindest eines der vorstehend erläuterten Probleme zu adressieren. Insbesondere soll eine Lösung vorgeschlagen werden, mit der trotz vorhandener Ungenauigkeiten ein möglichst guter Arbeitspunkt gefunden werden kann. Zumindest soll zu bisher bekannten Verfahren eine alternative Lösung vorgeschlagen werden.

Erfindungsgemäß wird ein Verfahren nach Anspruch 1 vorgeschlagen. Das Verfahren betrifft somit das Steuern eines Synchrongenerators einer Windenergieanlage. Es geht somit gezielt um das Steuern eines Synchrongenerators, wobei sowohl ein permanenterregter Synchrongenerator als auch ein fremderregter Synchrongenerator verwendet werden können.

Gemäß dem Verfahren werden zum Ansteuern des Synchrongenerators vorläufige Stromsollwerte mittels einer Stromvorgabeeinrichtung zum Einstellen eines vorläufigen Arbeitspunktes vorgegeben. Die Stromvorgabeeinrichtung kann dem vorerwähnten Arbeitspunktmodul entsprechen. Die Stromvorgabeeinrichtung gibt somit vorläufige Stromsollwerte vor. Das können insbesondere die Stromkomponenten I_{d} und I_{q} sein, also eine d-Komponente und eine q-Komponente des Statorstroms. Diese beiden Komponenten beziehen sich auf den Statorstrom in d/q-Koordinaten für ein dreiphasiges System. Sollte der Synchrongenerator mehrere dreiphasige Systeme aufweisen, können entsprechend mehrere d- und q-Komponenten vorgegeben werden.

Wenn als Synchrongenerator ein fremderregter Synchrongenerator angesteuert wird, so kann auch noch ein Erregerstrom Iₑ als Stromsoll vorgegeben werden.

Solche vorläufigen Stromsollwerte sind geeignet, den Synchrongenerator anzusteuern und ihn auch in einem Arbeitspunkt zu betreiben. Ein solcher Arbeitspunkt ist auch als dauerhaft und sinnvoll anzusehen. Es wird lediglich angenommen, dass ein solcher Arbeitspunkt noch nicht optimal ist, insbesondere aufgrund von vorstehend erläuterten Ungenauigkeiten, und noch verbessert werden kann. Insbesondere können noch Verluste weiter minimiert werden.

Das Verfahren schlägt somit weiter vor, die von der Stromvorgabeeinrichtung vorgegebenen vorläufigen Stromsollwerte durch Korrekturwerte in modifizierte Stromsollwerte zu verändern, um dadurch den vorläufigen Arbeitspunkt zu optimieren. Die Korrekturwerte können synonym auch als Modifizierungswerte bezeichnet werden. Durch sie werden somit die vorläufigen Stromsollwerte in die modifizierten Stromsollwerte verändert. Besonders sind die Korrekturwerte bzw. Modifizierungswerte so, dass sie eine Amplitude aufweisen, die geringer als eine Amplitude des entsprechenden vorläufigen Stromsollwertes ist, den sie modifizieren. Insbesondere beträgt ihre Amplitude maximal 30 % der Amplitude des betreffenden vorläufigen Stromsollwertes.

Insbesondere liegen die vorläufigen Stromsollwerte bereits als d- oder q-Komponenten oder als Erregerstrom vor und werden durch die Korrekturwerte bzw. Modifizierungswerte nur in ihrer Amplitude verändert, sodass auch die modifizierten Stromsollwerte als d- bzw. q-Komponenten vorliegen bzw. als Erregerstrom.

Die Korrekturwerte bzw. Modifizierungswerte können insbesondere auf die jeweiligen vorläufigen Stromwerte aufaddiert werden oder mit ihnen multipliziert

Es ist vorgesehen, dass eine Anpassungseinrichtung die Korrekturwerte bzw. Modifizierungswerte bestimmt, nämlich durch eine Anpassungsvorschrift der Anpassungseinrichtung. Korrekturwerte werden insoweit separat zur Vorgabe der vorläufigen Stromsollwerte mittels der Stromvorgabeeinrichtung bzw. mittels der Anpassungsvorschrift bestimmt.

Schließlich werden die modifizierten Stromsollwerte zum Ansteuern des Synchrongenerators verwendet, um einen modifizierten Arbeitspunkt einzustellen. Der Synchrongenerator wird somit mit diesen modifizierten Stromsollwerten betrieben und die modifizierten Stromsollwerte geben dadurch den modifizierten Arbeitspunkt vor, in dem der Synchrongenerator betrieben wird. Dieser modifizierte Arbeitspunkt kann dem vorläufigen Arbeitspunkt ähnlich sein, mit dem der Synchrongenerator betrieben werden würde, wenn dazu die vorläufigen Stromsollwerte anstelle der modifizierten Stromsollwerte verwendet werden würden.

Somit kann dadurch der Arbeitspunkt des Synchrongenerators verändert werden und bei geeigneter Vorgabe der Korrekturwerte bzw. Modifizierungswerte ergibt sich somit auf einfache Art und Weise eine Optimierung des Arbeitspunktes des Synchrongenerators.

Gemäß einem Aspekt wird somit vorgeschlagen, dass die von der Stromvorgabeeinrichtung vorgegebenen vorläufigen Stromsollwerte ohne Veränderung durch die Korrekturwerte zum Ansteuern des Synchrongenerators geeignet sind, um den vorläufigen Arbeitspunkt einzustellen. Mit anderen Worten sind also die vorläufigen Stromsollwerte bereits ohne Modifizierung vollwertige Stromsollwerte, mit denen der jeweilige Arbeitspunkt eingestellt werden kann. Es handelt sich bei den vorläufigen Stromsollwerten also nicht um Zwischenwerte und/oder Werte vor einer Koordinatentransformation oder jegliche andere Werte, die zum Vorgeben eines geeigneten Arbeitspunktes zunächst noch weiter verändert werden müssen, da sich anderenfalls gar kein oder zumindest kein geeigneter Arbeitspunkt ergeben würde.

Gemäß einem Aspekt wird vorgeschlagen, dass die Stromvorgabeeinrichtung in Abhängigkeit von wenigstens einer Eingangsmessgröße und/oder wenigstens einer Eingangssteuergröße und/oder wenigstens einem Eingangsparameter die vorläufigen Stromsollwerte über ein Optimierungsverfahren bestimmt und ausgibt.

Eine Eingangsmessgröße ist insoweit eine Messgröße, die in das System, insbesondere die Stromvorgabeeinrichtung als Messgröße eingegeben wird. Eine solche Eingangsmessgröße kann eine Drehzahl und/oder eine Temperatur des Generators sein, oder eine Außentemperatur im Bereich des Generators und/oder der Windenergieanlage.

Ein Eingangssteuersignal ist ein Signal, das zum Steuern der Windenergieanlage, insbesondere zum Steuern des Generators in das System, insbesondere in die Stromvorgabeeinrichtung eingegeben wird. Ein solches Eingangssteuersignal kann eine Leistungsvorgabe und/oder eine Drehmomentvorgabe für den Generator sein.

Ein Eingangsparameter kann ein Parameter sein, der in das System eingegeben wird, insbesondere in die Stromvorgabeeinrichtung eingegeben wird. Ein Eingangsparameter kann ein geschätzter Parameter des Generators, wie ein elektrischer Widerstand und/oder eine Induktivität sein, und/oder eine Reglerverstärkung.

Die Stromvorgabeeinrichtung erhält also einige dieser Eingangsgrößen, insbesondere erhält sie wenigstens eine Eingangsmessgröße, wenigstens eine Eingangssteuergröße und wenigstens einen Eingangsparameter. Daraus werden die vorläufigen Stromsollwerte über ein Optimierungsverfahren bestimmt. Insbesondere wird auf eine Zielgröße optimiert, insbesondere auf einen Wirkungsgrad. Die Stromvorgabeeinrichtung bestimmt somit die vorläufigen Stromsollwerte insbesondere so, dass ein Wirkungsgrad optimiert, also maximiert wird. Die vorläufigen Stromwerte werden insoweit bereits als optimale Stromsollwerte vorgegeben, nämlich optimal im Sinne der zu optimierenden Zielgröße, aber unter der Annahme von Eigenschaften der Windenergieanlage, insbesondere von Eigenschaften von Komponenten der Windenergieanlage, wobei dieser Annahme Ungenauigkeiten zugrunde liegen können. Vereinfacht ausgedrückt würde die Stromvorgabeeinrichtung bereits optimale vorläufige Stromsollwerte ausgeben, wenn keinerlei Ungenauigkeiten vorliegen bzw. alle für das Bestimmen der vorläufigen Stromsollwerte zugrunde gelegten Annahmen exakt zuträfen.

Solche optimalen vorläufigen Stromsollwerte werden dann zusätzlich noch mittels der Korrekturwerte bzw. Modifizierungswerte in die modifizierten Stromsollwerte verändert und sollen dabei zu einem noch weiter optimierten Arbeitspunkt führen, insbesondere zu einem Arbeitspunkt mit einem noch höheren Wirkungsgrad. Diese weitere Optimierung ist dadurch möglich, dass durch die Korrekturwerte bzw. Modifizierungswerte Abweichungen durch besagte Ungenauigkeiten ausgeglichen werden, zumindest teilweise. Es wäre aber auch möglich, durch die Korrekturwerte ein abweichendes Ziel vorzugeben, als eine Optimierung oder reine Optimierung der Stromvorgabeeinrichtung. Bspw. können auch Modifizierungen zum Test oder zur Geräuschveränderung vorgenommen werden.

Gemäß einem Aspekt wird vorgeschlagen, dass die Stromvorgabeeinrichtung wenigstens eine d-Komponente I_{d} und eine q-Komponente I_{q} im Sinne einer d/q-Transformation als vorläufige Stromsollwerte für einen dreiphasigen Generatorstrom vorgibt. Optional ist vorgesehen, dass durch die Stromvorgabeeinrichtung zusätzlich wenigstens ein Erregerstromwert als Teil der vorläufigen Stromsollwerte vorgegeben wird, wenn der Synchrongenerator ein fremderregter Synchrongenerator ist.

Somit ist insbesondere vorgesehen, dass bereits die vorläufigen Stromsollwerte, also vor der Modifizierung in die modifizierten Stromsollwerte, als d- bzw. q-Komponenten vorgesehen sind. Im Falle eines fremderregten Synchrongenerators kann ein Erregerstromsollwert hinzukommen, der nicht transformiert ist, da der Erregerstrom ein Gleichstrom ist.

Jedenfalls werden somit die vorläufigen Stromsollwerte, gegebenenfalls mit Ausnahme eines Erregerstromsollwertes, im transformierten System vorgegeben. In diesem transformierten System erfolgt dann auch die Modifizierung zu den modifizierten Stromsollwerten. Mit anderen Worten liegen hierbei die Stromsollwerte sowohl vor als auch nach der Modifizierung als transformierte Komponenten vor, also als d- oder q-Komponente. Auch dies unterstreicht, dass bereits die vorläufigen Stromsollwerte geeignet sind, einen guten Arbeitspunkt vorzugeben und dieser lediglich durch die Modifikation weiter verbessert und/oder basierend auf einem anderen Optimierungsziel verändert wird.

Gemäß einem Aspekt wird vorgeschlagen, dass die vorläufigen Stromsollwerte durch Aufaddieren der Korrekturwerte bzw. Modifizierungswerte in die modifizierten Stromsollwerte verändert werden. Die Korrekturwerte können dafür vor dem Aufaddieren auch weiter verändert werden, oder mit einem Aktivierungssignal multipliziert werden. Das Aktivierungssignal kann insoweit, für jeden Korrekturwert, zwischen dem Wert 1 und 0 wechseln. Durch Multiplikation des Wertes 1 verändert sich somit nichts und die Korrekturwerte werden unmittelbar aufgeschaltet. Durch Multiplikation mit dem Wert 0 kann das Aufschalten verhindert werden.

Jedenfalls kann durch das Aufaddieren in einfacher Art und Weise die Modifizierung durchgeführt werden. Sie kann auch jederzeit unterbrochen werden, sodass die vorläufigen Stromsollwerte dann ohne Modifizierung bzw. Korrektur weiterverwendet werden.

Gemäß einem Aspekt wird vorgeschlagen, dass die Anpassungseinrichtung die Korrekturwerte in Abhängigkeit von Eingangsgrößen der Stromvorgabeeinrichtung und/oder den vorläufigen Stromsollwerten und optional weiteren Eingangsgrößen bestimmt.

Besonders ist vorgesehen, dass die Stromvorgabeeinrichtung Eingangsgrößen erhält, wie sie gemäß einem Aspekt vorstehend bereits beschrieben wurden, nämlich wenigstens eine Eingangsmessgröße und/oder wenigstens eine Eingangssteuergröße und/oder wenigstens einen Eingangsparameter. Es wird vorgeschlagen, besonders dieselben Eingangsgrößen der Stromvorgabeeinrichtung auch für die Anpassungseinrichtung, also zum Bestimmen der Korrekturwerte zu verwenden. Mit anderen Worten bestimmt die Stromvorgabeeinrichtung in Abhängigkeit von diesen Eingangsgrößen die vorläufigen Stromsollwerte und die Anpassungseinrichtung bestimmt die Korrekturwerte in Abhängigkeit von diesen Eingangsgrößen. Die vorläufigen Stromsollwerte können ebenfalls als Eingangsgrößen für die Anpassungseinrichtung zum Bestimmen der Korrekturwerte verwendet werden.

Besonders wurde hier erkannt, dass die Eingangsgrößen und/oder Ausgangsgrößen auch Aufschluss über die Ungenauigkeiten geben können, die vorstehend erwähnt wurden, sodass davon abhängig die Modifizierung durchgeführt wird. Besonders wurde hier erkannt, dass die Modifizierung, die die Unzulänglichkeiten aufgrund der Ungenauigkeiten ausgleichen soll, im Grunde ebenfalls vom aktuellen Betriebspunkt abhängt. Dieser kann durch die genannten Eingangsgrößen und vorläufigen Stromsollwerte gut berücksichtigt werden. Daher wird besonders vorgeschlagen, die Eingangsgrößen der Stromvorgabeeinrichtung und die vorläufigen Stromsollwerte zu berücksichtigen, um die Korrekturwerte zu bestimmen.

Optional können weitere Eingangsgrößen verwendet werden. Solche weiteren Eingangsgrößen können bspw. Temperaturen umfassen, die von der Stromvorgabeeinrichtung nicht berücksichtigt werden. Als weitere Daten kommen auch manuell und/oder einmalig eingegebene Daten in Betracht. Bspw. kann eine nachträgliche Vermessung des Generators vorgenommen werden und dabei erfasste Parameter, z. B. von ursprünglich werksseitig angenommenen Parametern abweichende Werte, in die Anpassungseinrichtung eingegeben werden. Auch Eingangsgrößen betreffend ein etwaiges anderes Optimierungsziel kommen in Betracht, wie bspw. erfasste Geräusche, wenn die Geräuschentwicklung optimiert, also verringert werden soll.

Gemäß einem Aspekt wird vorgeschlagen, dass die Anpassungseinrichtung selbstlernend ausgebildet ist und das Selbstlernen so erfolgt, dass die Anpassungsvorschrift so verändert wird, dass eine Bewertungsgröße optimiert wird, insbesondere ein Wirkungsgrad maximiert oder ein Verlustmaß minimiert wird.

Hier liegt besonders der Gedanke zugrunde, dass die bereits erläuterten Ungenauigkeiten schwer zu erfassen sind und durch dieses Selbstlernen durch Optimierung der Bewertungsgröße auch nicht erfasst werden müssen. Stattdessen erfolgt das Selbstlernen, das synonym auch als Adaptieren bezeichnet werden kann, so, dass die Bewertungsgröße optimiert wird. Besonders kann die Bewertungsgröße ein Wirkungsgrad sein, der entsprechend maximiert wird. Ebenfalls kann die Bewertungsgröße ein Verlustmaß sein, das ein Maß für die Verluste bildet. Das Verlustmaß kann ein Quotient aus aufgetretenen Verlusten zu erzeugter Wirkleistung des Generators sein. Das Verlustmaß kann auch Verluste als absolute Werte betreffen, oder die Verluste auf einen Referenzwert normieren wie die Nennleistung des Generators.

Das Selbstlernen erfolgt nun so, dass die Anpassungsvorschrift verändert wird und die Bewertungsgröße beobachtet wird. Ist die Bewertungsgröße bspw. der Wirkungsgrad, wird beobachtet, wie sich dieser verändert. Erhöht er sich, kann die Variation der Anpassungsvorschrift entsprechend fortgesetzt werden. Verringert sich der Wirkungsgrad, kann die Veränderung rückgängig gemacht werden und eine Veränderung in eine andere Richtung durchgeführt werden.

Die Anpassungsvorschrift kann, um ein einfaches Beispiel zu nennen, Einstellparameter umfassen, die jeweils mit einem von der Stromvorgabeeinrichtung vorgegebenen vorläufigen Stromsollwert multipliziert werden, um dadurch Korrekturwerte zu bestimmen, die auf die vorläufigen Stromsollwerte aufaddiert werden. Dazu können solche Anpassungsfaktoren im Bereich von +/- 0,1 % bis +/- 5 % liegen. Dann wird bspw. jeweils ein Stromsollwert mit einem solchen Anpassungsfaktor multipliziert. Beträgt der Anpassungsfaktor, um ein vereinfachtes Beispiel zu nehmen, 1 %, ergibt sich ein Korrekturwert in Höhe von 1 % des entsprechenden vorläufigen Stromsollwertes. Dies kann auf den vorläufigen Stromsollwert aufaddiert werden und es kann dann überwacht werden, ob sich die Bewertungsgröße verbessert, also insbesondere ob sich der Wirkungsgrad erhöht und/oder das Verlustmaß verringert, nämlich im Vergleich zu dem Betrieb der Windenergieanlage mit unverändertem vorläufigen Arbeitspunkt oder einem zuvor modifizierten Arbeitspunkt, der mithilfe einer anderen Anpassungsvorschrift modifiziert wurde, bspw. mit einem Anpassungsfaktor von 0,5 %. Erhöht sich also der Wirkungsgrad oder verringert sich das Verlustmaß insoweit, kann der neue Korrekturwert bzw. der dafür zugrundeliegende Anpassungsfaktor verwendet werden. Die Anpassungsvorschrift ist dann bereits einmal angelernt worden. Die Umsetzung kann aber auch so erfolgen, dass anstatt der Berechnung eines aufzuaddierenden Korrekturwertes, der vorläufige Stromsollwert direkt mit einem Korrekturfaktor multipliziert wird. Der kann dann, um die genannten bevorzugten Werte von +/-0,1% bis +/-5% umzusetzen, Werte von 100,1% bis 105% bzw. 99,9% bis 95% annehmen.

Es kommen auch weitere Berücksichtigungen in Betracht, bei denen weitere Eingangsgrö-ßen für die Anpassungseinrichtung und damit die Anpassungsvorschrift verwendet werden. Bspw. können eine erfasste Generatortemperatur mit einem weiteren Anpassungsfaktor, der hier als Generatortemperatur-Anpassungsfaktor bezeichnet werden kann, multipliziert. Ein einfacher Prozentwert kann für einen solchen Anpassungsfaktor nicht verwendet werden, da sich schon die physikalischen Einheiten zwischen der Generatortemperatur und dem aufzuaddierenden Korrekturwert unterscheiden. Die Größe eines solchen Generatortemperatur-Anpassungsfaktors kann für einen Anpassungswert empirisch ermittelt werden, bspw. durch Voruntersuchungen und/oder Simulationen. Dadurch kann die ungefähre Größe eines solchen Generatortemperatur-Anpassungsfaktors bekannt sein und die kann dann weiter variiert werden, um die Bewertungsgröße weiter zu verbessern.

In diesem Sinne können weitere Eingangsgrößen verwendet werden, besonders solche, die bereits als Eingangsgrößen der Stromvorgabeeinrichtung beschrieben wurden und/oder als weitere Eingangsgrößen erläutert wurden. Die jeweiligen Korrekturwerte, nämlich jeweils für einen der vorläufigen Stromsollwerte, auf die sie besonders aufaddiert werden kann, kann sich aus einer Summe mehrerer Teilkorrekturwerte zusammensetzen. Das Multiplizieren eines vorläufigen Stromsollwertes mit seinem Anpassungsfaktor, wie oben beispielhaft erläutert wurde, kann einen Teilkorrekturwert bilden. Die Multiplikation einer Generatortemperatur mit ihrem Generatortemperatur-Anpassungsfaktor kann einen weiteren Teilkorrekturwert bilden. Auf diese Weise kann sich jeweils ein Korrekturwert aus mehreren Teilkorrekturwerten zusammensetzen, insbesondere als Summe, wobei aber für jeden Teilkorrekturwert eine Gewichtung vorgesehen sein kann. Eine Gewichtung ist besonders dann sinnvoll, wenn die Berechnung des Teilkorrekturwertes auf mehreren und nicht ausschließlich auf einem Anpassungsfaktor beruht, denn dieser eine Anpassungsfaktor könnte die Gewichtung bereits umfassen.

Jedenfalls kann auf diese oder andere Art und Weise für jeden vorläufigen Stromsollwert ein Korrekturwert bestimmt und auf den jeweiligen vorläufigen Stromsollwert aufaddiert werden.

Das Verfahren zum Adaptieren bzw. Selbstlernen kann sowohl online als auch offline ausgeführt werden. Zum Online-Ausführen kann im Grunde wie beschrieben vorgegangen werden und jeweils die aktuellen Werte verwendet werden. Zum Offline-Lernen können die wie beschrieben verwendeten Daten zunächst aufgenommen und abgespeichert werden. Das Selbstlernen kann dann basierend auf den abgespeicherten Werten erfolgen. Durch das Offline-Lernen kommt in Betracht, dass dafür ein Hochleistungsrechner eingesetzt wird, der online möglicherweise nicht verfügbar ist. Dadurch sind komplexere Lernvorgänge und damit auch komplexere Strukturen in der Anpassungseinrichtung möglich bzw. dadurch ist eine komplexere Anpassungsvorschrift realisierbar, die angelernt werden kann.

Gemäß einem Aspekt wird vorgeschlagen, dass zum Selbstlernen der Anpassungseinrichtung Korrekturwerte und/oder Einstellungen der Anpassungsvorschrift variiert werden, dabei Anpassungseingangsgrößen aufgenommen werden, wobei die Anpassungseingangsgrößen Eingangsgrößen der Anpassungseinrichtung bezeichnen. Somit werden die Eingangsgrößen, die in die Anpassungseinrichtung und damit in die Anpassungsvorschrift eingehen, aufgenommen. Insoweit sämtliche Eingangsgrößen der Anpassungseinrichtung die Anpassungsvorschrift und damit die Korrekturwerte beeinflussen, sollten diese vorzugsweise auch hierbei aufgenommen werden. Alle Eingangsgrößen, von denen abhängig die Anpassungsvorschrift die Korrekturwerte bestimmt, sollten hierbei also aufgenommen werden.

Außerdem wird die zu optimierende Bewertungsgröße aufgenommen und die variierten Korrekturwerte bzw. Einstellungen der Anpassungsvorschrift in Bezug auf die aufgenommene Bewertungsgröße bewertet. Als erlernte Korrekturwerte und/oder als erlernte Einstellungen der Anpassungsvorschrift werden solche gewählt, die zu einer verbesserten, insbesondere optimierten Bewertungsgröße geführt haben.

Insoweit erfolgt ein Selbstlernen wie vorstehend bereits zu einem Aspekt erläutert wurde. Durch das Selbstlernen können dabei unmittelbar geeignete Korrekturwerte erlernt werden, die nämlich den jeweiligen Anpassungseingangsgrößen zugeordnet sind. In diesem Fall kann ein entsprechend umfangreicher Lookup Table angelegt werden, in dem die Anpassungseingangsgrößen entsprechenden Korrekturwerten zugeordnet sind. Beim späteren Abrufen der Korrekturwerte können entsprechende Interpolationen vorgenommen werden, da selten exakt die gleichen Anpassungseingangsgrößen vorliegen.

Stattdessen oder ergänzend kann die Anpassungsvorschrift erlernt werden. Insbesondere Parameter der Anpassungsvorschrift können erlernt werden. Im einfachsten Fall kann eine solche Anpassungsvorschrift im Wesentlichen für einen großen Bereich der Anpassungseingangsgrößen Gültigkeit haben. Es kommt aber auch in Betracht, dass die Anpassungsvorschrift Parameter aufweist, die in Abhängigkeit von den Anpassungseingangsgrößen variieren. Bspw. können Parameter bei besonders hohen Drehzahlen anders gewählt sein als bei geringeren Drehzahlen.

Es kommt auch in Betracht, dass als Anpassungseingangsgröße, zusätzlich oder ausschließlich, vorläufige Stromsollwerte und/oder ein daraus abgeleiteter vorläufiger Arbeitspunkt berücksichtigt werden. Da die Korrekturwerte im Vergleich zu den Stromsollwerten vergleichsweise klein erwartet werden, können auch die modifizierten Stromsollgrößen oder der modifizierte Arbeitspunkt verwendet werden. Die Stromsollgrößen oder der Arbeitspunkt können dann lediglich als Orientierung zur Bewertung verwendet werden, ob nämlich für den aktuellen Arbeitspunkt bzw. die aktuellen Stromsollwerte die Bewertungsgröße verbessert werden konnte, also insbesondere ein Wirkungsgrad erhöht bzw. ein Verlustmaß verringert werden konnte. Hier kommt insbesondere in Betracht, dass der Wirkungsgrad nicht für jeden Arbeitspunkt gleich hoch erzielt werden kann.

Anpassungseingangsgrößen können somit Größen umfassen, die einen Arbeitspunkt kennzeichnen, zumindest teilweise. Anpassungseingangsgrößen können auch andere Größen umfassen, wie Umgebungstemperaturen. Dadurch können sich bei gleichem Arbeitspunkt unterschiedliche Ergebnisse ergeben und das kann beim Selbstlernen der Anpassungseinrichtung berücksichtigt werden. Dadurch kann die Anpassungseinrichtung so angelernt werden, dass sie bei gleichen Arbeitspunkte dennoch unterschiedlich arbeitet, nämlich abhängig von den weiteren Größen, die als Anpassungseingangsgrößen berücksichtigt wurden.

Ganz grundsätzlich kann die Bewertungsgröße auch als Zieloptimierungsgröße bezeichnet werden, denn sie beschreibt die zu optimierende Zielgröße.

Zum Selbstlernen können bekannte Optimierungsverfahren, die aus Optimierungen mittels künstlicher Intelligenz bekannt sind, verwendet werden. Insbesondere ein als "genetischer Algorithmus" bekanntes Verfahren, oder ein als "Partikelschwarmoptimierung" bekanntes Verfahren können verwendet werden, wodurch Selbstlernen gezielter und effizienter umgesetzt werden kann.

Ein gezieltes Selbstlernen durch einen "genetischen Algorithmus" kann folgendermaßen realisiert werden. Bei der Erläuterung wird der Einfachheit halber davon ausgegangen, dass die Anpassungseingangsgrößen während des Selbstlernens gleichbleiben. Bei der Anwendung des genetischen Algorithmus auf das Selbstlernen kann jeder Parametersatz der Anpassungseinrichtung als ein Chromosom betrachtet werden. Bei erster Generation mit einer Populationszahl von n sollten n zufällige Parametersätze bzw. Chromosomen definiert werden.

Diese n Parametersätze werden nacheinander für eine gewisse Zeitdauer in der Anpassungseinrichtung eingesetzt. Dadurch werden n verschiedene Korrekturwerte nacheinander generiert und angewendet. Dabei kann die zu optimierende Zielgröße für diese n Zustände, also die n verschiedenen Korrekturwerte, jeweils ermittelt und/oder gemessen werden. Durch die Bewertung der zu optimierenden Zielgröße, was jeweils als Zuordnen eines Fitnesswertes bezeichnet werden kann, für diese n Zustände, kann eine Teilemenge der n Parametersätze bestimmt werden, die zu einer vergleichsweise besseren Zielgröße geführt haben. Diese Teilmenge wird als die Überlebenden aus der ersten Generation betrachtet und steht demzufolge zur Generierung einer nächsten Generation zur Verfügung.

Nun werden n neue Parametersätze für die zweite Generation durch die Kreuzung zwischen der Teilmenge der Überlebenden erstellt werden. Hierzu können immer zwei Parametersätze paarweise aus der Teilmenge der Überlebenden zufällig ausgewählt werden. Für die Kreuzung der beiden ausgewählten Parametersätze können unterschiedliche Verfahren eingesetzt werden. Ein Beispiel hierzu ist, dass eine zufällig auswählte Hälfte der Parameter von einem Parametersatz durch ihr Äquivalent aus dem anderen Parametersatz ausgetauscht werden.

Somit entstehen zwei neue Parametersätze für die nächste Generation, die eine Mischung von den guten Eigenschaften der ersten Generation aufweisen. Auf diese Art und Weise können n neue Parametersätze für die zweite Generation erzeugt werden, die im Durchschnitt zu besseren Werten der zu optimierenden Zielgröße im Vergleich zur Vorgängergeneration führen. Durch die Wiederholung des beschriebenen Prozesses kann nach einigen Generationen der bestmögliche, oder zumindest ein guter, Parametersatz gezielt identifiziert und gelernt werden.

Gemäß einem Aspekt wird vorgeschlagen, dass als Anpassungsvorschrift ein künstliches neuronales Netz verwendet wird. Die Verwendung eines künstlichen neuronalen Netzes hat den Vorteil, dass eine Strukturvorgabe vergleichsweise offen bleiben kann. Das ist besonders dann von Vorteil, wenn diverse Anpassungseingangsgrößen verwendet werden. Besonders kommt in Betracht, dass wenigstens zwei vorläufige Stromsollgrößen als Anpassungseingangsgrößen verwendet werden. Zusätzlich können wenigstens eine Eingangsmessgröße der Stromvorgabeeinrichtung, wenigstens eine Eingangssteuergröße der Stromvorgabeeinrichtung und wenigstens ein Eingangsparameter der Stromvorgabeeinrichtung verwendet werden. Dann sind wenigstens fünf Anpassungseingangsgrößen vorhanden, aus denen wenigstens zwei Korrekturwerte bestimmt werden, nämlich für die d-Komponente des Stromsollwertes und für die q-Komponente des Stromsollwertes. Im Falle eines fremderregten Synchrongenerators kann zusätzlich ein Korrekturwert für den Erregerstrom bestimmt werden. In dem Fall liegen also wenigstens fünf Eingangsgrößen und zwei oder drei Ausgangsgrößen der Anpassungseinrichtung bzw. Anpassungsvorschrift vor. Dabei kann grundsätzlich jede Anpassungseingangsgröße Einfluss auf jede der zwei oder drei Korrekturwerte haben.

Durch Verwendung eines künstlichen neuronalen Netzes können die beschriebenen vielen Eingangsgrößen mit den beschriebenen mehreren Ausgangsgrößen gekoppelt werden. Dazu können vorzugsweise wenigstens zwei, drei, vier oder mehr Layer vorgesehen sein, die jeweils wenigstens fünf oder mehr Knoten aufweisen. Dadurch können die genannten Eingangs- und Ausgangsgrößen über ein solches künstliches neuronales Netz verbunden werden und die Zusammenhänge können erlernt werden.

Gemäß einem Aspekt wird vorgeschlagen, dass das Verändern der vorläufigen Stromsollwerte in die modifizierten Stromsollwerte, insbesondere das Aufaddieren der Korrekturwerte auf die vorläufigen Stromsollwerte, zeitweise und/oder abwechselnd durch ein Aktivierungsmittel aktiviert und deaktiviert wird. Insbesondere ist vorgesehen, dass Arbeitspunkte mit aktiviertem und deaktiviertem Verändern der vorläufigen Stromsollwerte verglichen und bewertet werden, um die Anpassungseinrichtung anzulernen bzw. zu adaptieren. Dabei können zusätzlich zu den Arbeitspunkten Randbedingungen wie Umgebungstemperaturen bei dem Vergleich berücksichtigt und in das Vergleichen und Bewerten mit einbezogen werden.

Das Aktivierungsmittel kann besonders als Multiplikationsstelle ausgebildet sein, an der die Korrekturwerte zur Aktivierung mit 1 und zur Deaktivierung mit 0 multipliziert werden. Es kommt aber auch in Betracht, dass zum Deaktivieren die aufzuaddierenden Korrekturwerte einfach auf 0 gesetzt werden, durch eine entsprechende Programmierung in einer Steuerung.

Der besondere Vorteil liegt hier darin, dass durch das Aktivieren und Deaktivieren eine schnelle Umschaltung durchgeführt werden kann und dadurch unmittelbar ein Vergleich für einen vorläufigen Arbeitspunkt und einen modifizierten Arbeitspunkt gezogen werden kann, ohne dass sich in der Zeit Randbedingungen merklich ändern können. Das Verfahren betrifft das Ansteuern eines Synchrongenerators, und eine Veränderung des Arbeitspunktes durch Verändern der entsprechenden Stromsollwerte und damit auch der tatsächlichen Ströme kann innerhalb weniger Sekunden oder noch schneller umgesetzt werden, selbst bei sehr großen Generatoren. Hier kommen als große Generatoren insbesondere Synchrongeneratoren einer getriebelosen Windenergieanlage in Betracht. In der kurzen Zeit können Randbedingungen als konstant angesehen werden.

Jedenfalls können somit vorläufige und modifizierte Arbeitspunkte bei gleichen Randbedingungen verglichen werden, wodurch Änderungen der Bewertungsgröße, insbesondere des Wirkungsgrades und/oder des Verlustmaßes auf die Korrekturwerte zurückzuführen sind. Durch mehrfaches abwechselndes Aktivieren und Deaktivieren können die Vergleiche wiederholt werden, wodurch mögliche geringe Schwankungen noch herausgemittelt werden können.

Insbesondere wird vorgeschlagen, in regelmäßigen Zeitintervallen das Verändern abwechselnd zu aktivieren und zu deaktivieren. Solche Zeitintervalle können bspw. 30 Sekunden betragen. Insbesondere liegen solche Zeitintervalle im Bereich von 10 Sekunden bis 5 Minuten, insbesondere 10 Sekunden bis 2 Minuten und weiter bevorzugt im Bereich von 20 Sekunden bis 1 Minute. Durch solche Zeitintervalle wird eine schnelle Umschaltung ermöglicht, innerhalb derer Randbedingungen, insbesondere Temperaturen und eine Generatordrehzahl, jedenfalls bei einer getriebelosen Windenergieanlage, sich kaum ändern. Gleichzeitig ist die Zeit aber so groß gewählt, dass sich der jeweilige vorläufige oder modifizierte Arbeitspunkt stabil einstellen kann. Die Generatordrehzahl kann sich zwar üblicherweise schneller ändern, als die Temperatur, auch im Minutenbereich, aber je nach Windverhältnissen kann sie sogar für einige Minuten stabil bleiben. Ist mit einer schnelleren Veränderung der Generatordrehzahl zu rechnen, kann das Zeitintervall entsprechend kleiner, insbesondere am unteren Ende der vorgeschlagenen Bereiche gewählt werden.

Gemäß einem Aspekt wird vorgeschlagen, dass die Korrekturwerte mittels einer Begrenzungseinrichtung begrenzt werden, um das Verändern der vorläufigen Stromsollwerte zu begrenzen. Insbesondere können solche Begrenzungen vermeiden, dass die Stromwerte zu stark verändert werden.

Dieser Aspekt ist insbesondere für das Selbstlernen vorgesehen. Es wurde erkannt, dass man durch die Begrenzung einen Schaden falscher Korrekturwerte einschränken kann. Vorzugsweise wird die Begrenzung für die Lernphase vorgeschlagen, dass die Korrekturwerte am Anfang stark eingeschränkt werden. Die Begrenzung wird dann in einer mehrstufigen Lernphase schrittweise aufgehoben oder ausgeweitet.

Es ist zu beachten, dass die Stromvorgabeeinrichtung mit den vorläufigen Stromsollwerten bereits sehr gut angepasste Stromsollwerte vorgibt und damit auch einen recht gut ausgelegten Arbeitspunkt vorgibt. Durch die Modifizierung der vorläufigen Stromsollwerte in die modifizierten Stromsollwerte soll lediglich eine Optimierung vorgenommen werden, aber die Stromwerte nicht grundlegend verändert werden.

Das kann durch die Begrenzungseinrichtung sichergestellt werden. Insbesondere ist vorgesehen, dass zur Begrenzung die Begrenzungseinrichtung Stromkorrekturgrenzen vorgibt, die die Korrekturwerte auf den dem Betrage nach maximalen Korrekturwert beschränkt. Der maximale Korrekturwert wird insbesondere in Abhängigkeit von dem jeweiligen Stromsollwert vorgegeben. Vorzugsweise werden die Stromkorrekturwerte dem Betrage nach auf maximal 20 %, insbesondere maximal 10 % und vorzugsweise maximal 5 % und weiter bevorzugt auf maximal 1% des jeweiligen vorläufigen Stromsollwertes begrenzt, den sie modifizieren sollen.

Alternativ können die Korrekturwerte in Relation zu einem Nennstrom des jeweiligen Sollstroms begrenzt werden. Vorzugsweise werden die Korrekturwerte hierbei dem Betrage nach auf maximal 20 %, insbesondere maximal 10 % und insbesondere maximal 5 % und weiter bevorzugt auf maximal 1% des jeweiligen Stromnennwertes des zu modifizierenden vorläufigen Stromwertes begrenzt. Durch solche Begrenzungen wird erreicht, dass der jeweilige vorläufige Stromsollwert nicht grundlegend verändert wird, sondern nur zur Optimierung angepasst wird.

Gemäß einem Aspekt wird vorgeschlagen, dass als Synchrongenerator ein Synchrongenerator einer getriebelosen Windenergieanlage gesteuert wird. Ein solcher Synchrongenerator einer getriebelosen Windenergieanlage unterscheidet sich grundlegend von einem Synchrongenerator einer getriebebehafteten Windenergieanlage. Ein solcher Synchrongenerator einer getriebelosen Windenergieanlage weist wenigstens einen fünffachen Luftspaltdurchmesser gegenüber einem Synchrongenerator gleicher Leistung einer getriebebehafteten Windenergieanlage auf. Entsprechend unterscheiden sich auch seine elektrischen Parameter, insbesondere Induktivitäten. Außerdem ist ein Synchrongenerator einer getriebelosen Windenergieanlage ein langsam drehender Generator, demgegenüber ein Synchrongenerator einer getriebebehafteten Windenergieanlage wenigstens die 20-fache Nenndrehzahl aufweist.

All dies hat signifikanten Einfluss auf das Vorgeben der vorläufigen Stromsollwerte und das Bestimmen der Korrekturwerte zum Modifizieren der vorläufigen Stromsollwerte.

Erfindungsgemäß wird auch eine Windenergieanlage mit einem Synchrongenerator vorgeschlagen und die Windenergieanlage ist dazu eingerichtet, ein Verfahren zum Steuern des Synchrongenerators durchzuführen. Das Verfahren arbeitet so, dass
- zum Ansteuern des Synchrongenerators vorläufige Stromsollwerte mittels einer Stromvorgabeeinrichtung zum Einstellen eines vorläufigen Arbeitspunktes vorgegeben werden,
- die von der Stromvorgabeeinrichtung vorgegebenen vorläufigen Stromsollwerte durch Korrekturwerte in modifizierte Stromsollwerte verändert werden, um den vorläufigen Arbeitspunkt zu optimieren, wobei
- eine Anpassungseinrichtung die Korrekturwerte durch eine Anpassungsvorschrift der Anpassungseinrichtung bestimmt, und
- die modifizierten Stromsollwerte zum Ansteuern des Synchrongenerators verwendet werden, um einen modifizierten Arbeitspunkt einzustellen.

Die Windenergieanlage ist somit insbesondere dazu vorbereitet, ein Verfahren gemäß einem der vorstehend erläuterten Aspekte auszuführen. Die Windenergieanlage kann dadurch dazu vorbereitet sein, das Verfahren auszuführen, dass ein solches Verfahren auf einem Prozessrechner oder Betriebssteuerung der Windenergieanlage implementiert ist.

Somit weist die Windenergieanlage eine entsprechende Stromvorgabeeinrichtung zum Vorgeben der vorläufigen Stromsollwerte auf. Diese Stromvorgabeeinrichtung kann als Prozessrechner ausgebildet sein und/oder Teil einer Betriebssteuerung der Windenergieanlage sein. Ebenfalls weist die Windenergieanlage die Anpassungseinrichtung auf, die die Korrekturwerte bestimmt. Die Anpassungseinrichtung kann als Reglermodul ausgebildet sein und die Anpassungsvorschrift umfassen. Die Anpassungsvorschrift kann entsprechend als Computerprogramm ausgebildet und implementiert sein. Die Anpassungseinrichtung kann auch Teil einer Betriebssteuerung sein.

Gemäß einem Aspekt ist vorgesehen, dass die Windenergieanlage eine Anlagensteuerung aufweist und die Windenergieanlage, insbesondere die Anlagensteuerung dazu vorbereitet ist, ein Verfahren gemäß einem der vorstehend genannten Aspekte auszuführen.

Das Verfahren wird dazu insbesondere auf der Anlagensteuerung implementiert und dadurch kann die Windenergieanlage möglichst optimal betrieben werden, zumindest der Synchrongenerator der Windenergieanlage.

Gemäß einem Aspekt ist vorgesehen, dass die Windenergieanlage getriebelos ausgebildet ist. Somit ist ein entsprechender Generator vorgesehen, der insbesondere einen Luftspaltdurchmesser von wenigstens 2 Meter, insbesondere wenigstens 3 Meter aufweist. Dadurch, dass eine getriebelose Windenergieanlage und damit ein entsprechend großer Generator verwendet wird, kann das Verfahren besonders gut angewendet werden, da besonders ein Umschalten zwischen vorläufigen und modifizierten Stromwerten bei möglichst konstanten Randbedingungen durchgeführt werden kann. Dadurch ist eine Adaption bzw. ein Anlernen, wie vorstehend beschrieben, gut durchführbar.

Die Erfindung wird nachfolgend detailliert und exemplarisch unter Bezugnahme auf die begleitenden Figuren näher erläutert.
- Figur 1: zeigt eine Windenergieanlage in einer perspektivischen Darstellung.
- Figur 2: zeigt eine Windenergieanlage mit einem fremderregten Synchrongenerator nebst Umrichter zum Ansteuern des Generators und zum Einspeisen ins elektrische Versorgungsnetz.
- Figur 3: zeigt eine Windenergieanlage mit einem Permanentmagnetgenerator mit einem Umrichter zum Ansteuern des Generators und zum Einspeisen in das elektrische Versorgungsnetz.
- Figur 4: zeigt eine Stromvorgabeeinrichtung in einer schematischen Darstellung.
- Figur 5: zeigt schematisch eine Stromvorgabeeinrichtung mit einer Anpassungseinrichtung.
- Figur 6: zeigt schematisch eine Stromvorgabeeinrichtung mit einer Anpassungseinrichtung und einem Modul zum Unterstützen des Selbstlernens der Anpassungseinrichtung, insbesondere des Offline-Selbstlernens.

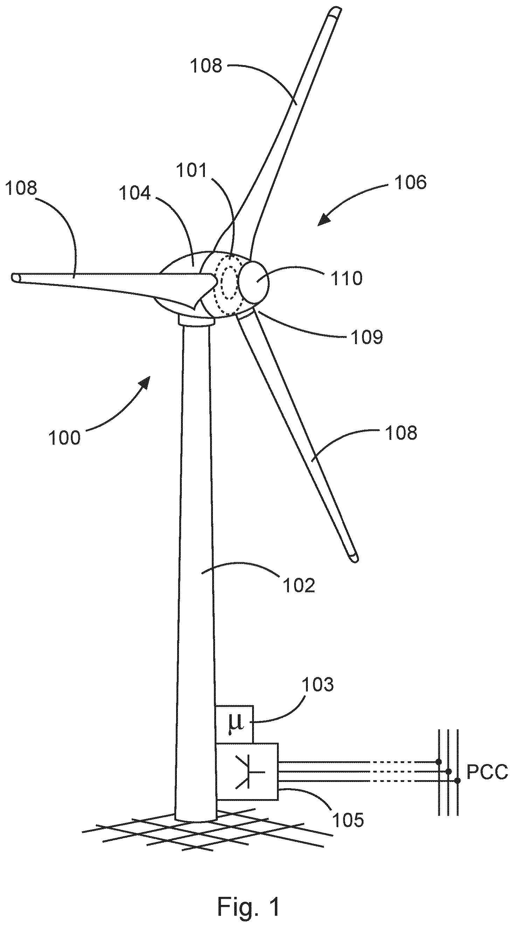

**Figur 1** zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Die Blattwinkel der Rotorblätter 108 können durch Pitchmotoren an Rotorblattwurzeln 109 der jeweiligen Rotorblätter 108 verändert werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

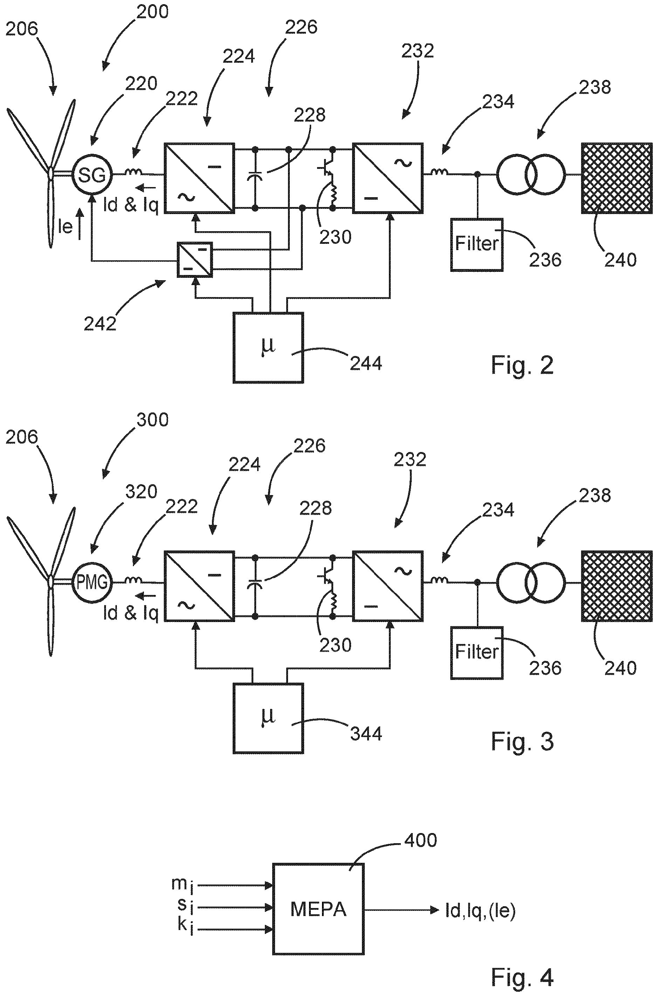

**Figur 2** zeigt schematisch eine Windenergieanlage 200 mit einem Rotor 206. Die Windenergieanlage 200 kann der Windenergieanlage 100 der Figur 1 entsprechen. In Figur 2 ist von der Windenergieanlage ein für die Erfindung relevanter Teil dargestellt. Dazu gehört der fremderregte Synchrongenerator 220, der über eine generatorseitige Drossel 222 mit einem Statorstrom angesteuert wird. Repräsentativ für diesen Statorstrom stehen die Stromkomponenten I_{d} und I_{q} des in d/q-Koordinaten transformierten Statorstroms. Die Ansteuerung erfolgt über einen generatorseitigen Wechselrichter 224. Der generatorseitige Wechselrichter 224 ist mit einem Gleichspannungszwischenkreis 226 gekoppelt, der eine Zwischenkreiskapazität 228 aufweist. In dem Zwischenkreis ist außerdem eine Chopperschaltung 230 vorgesehen, die bei Bedarf Energie aus dem Gleichspannungszwischenkreis 226 abführen kann, besonders in Verlustleistung.

Zum Einspeisen ist zudem ein netzseitiger Wechselrichter 232 vorgesehen, der ebenfalls mit dem Gleichspannungszwischenkreis 226 gekoppelt ist und über eine netzseitige Drossel 234 und einen Filter 236, der besonders auf die netzseitige Drossel 234 abgestimmt sein kann, und weiter über einen Transformator 238 in ein elektrisches Versorgungsnetz 240 einspeist.

Zum Vorgeben eines Erregerstroms Iₑ für den fremderregten Synchrongenerator 220 ist zudem ein Stromsteller 242 vorgesehen. Zum Ansteuern wenigstens des Stromstellers 242, des generatorseitigen Wechselrichters 224 und des netzseitigen Wechselrichters 232 ist eine Ansteuereinheit 244 vorgesehen. Die Ansteuereinheit kann auch Teil einer Betriebssteuerung sein und sie kann die Stromvorgabeeinrichtung und die Anpassungseinrichtung, die noch in den nachfolgenden Figuren 4 bis 6 beschrieben werden, beinhalten.

**Figur 3** zeigt schematisch eine Windenergieanlage 300 mit einem Rotor 206, die im Wesentlichen der Windenergieanlage 200 der Figur 2 entspricht. Der wesentliche Unterschied besteht darin, dass Figur 3 eine Windenergieanlage 300 mit einem Synchrongenerator mit Permanentmagneten zeigt, der auch als Permanentmagnetgenerator 320 bezeichnet werden kann. Dadurch fällt die Vorgabe eines Erregerstroms Iₑ und damit der in Figur 2 gezeigte Stromsteller 242 weg. Ansonsten können gleiche oder ganz ähnliche Elemente wie in Figur 2 verwendet werden, wobei die Ansteuerung des Statorstroms über die Stromkomponenten I_{d} und I_{q} abweichen können.

Die Windenergieanlage 300 weist also zumindest diverse ähnliche Elemente wie in Figur 2 gezeigt auf und daher werden der besseren Übersichtlichkeit halber die gleichen Bezugszeichen verwendet, selbst wenn minimale Unterschiede vorhanden sein sollten. Figur 3 zeigt auch eine Ansteuereinheit 344, die gegenüber Figur 2 ein anderes Bezugszeichen erhalten hat, um zu verdeutlichen, dass sie keinen Ausgang zum Ansteuern eines Stromstellers benötigt. Im Übrigen kann die Ansteuereinheit 344, was auch für die Ansteuereinheit 244 der Figur 2 gilt, weitere Ansteuerungen vornehmen, wie das Ansteuern der Chopperschaltung 230. Wenn der Filter 236 nicht passiv ist, könnte auch dieser von der Ansteuereinheit 244 bzw. 344 angesteuert werden.

**Figur 4** zeigt eine Stromvorgabeeinrichtung 400 in einer schematischen Darstellung. Die Stromvorgabeeinrichtung 400 gemäß Figur 4 erhält als Eingangswerte Eingangsmessgrö-ßen mi, Eingangssteuersignale sᵢ und Eingangsparameter kᵢ. Eingangsmessgrößen können Temperaturen wie eine Generatortemperatur oder Umgebungstemperatur sein. Es kommen auch erfasste Werte elektrischer Größen des Generators in Betracht. Eingangssteuersignale können Sollwerte wie ein Leistungssollwert für die Leistungsabgabe des Generators sein. Eingangsparameter können Eigenschaften des Generators wie ein elektrischer Widerstand oder Induktivität sein.

Abhängig von diesen Eingangsmessgrößen mi, Eingangssteuersignalen sᵢ und Eingangsparametern kᵢ. bestimmt die Stromvorgabeeinrichtung 400 Stromsollwerte, nämlich I_{d} und I_{q} als Sollwerte für den Statorstrom in d/q-Koordinaten. Wenn ein fremderregter Synchrongenerator verwendet wird, wie in Figur 2 gezeigt, wird zusätzlich noch ein Erregerstrom Iₑ vorgegeben. Diese Stromsollwerte können als Ausgangssollgrößen bezeichnet werden und sie bilden die vorläufigen Stromsollwerte, die erfindungsgemäß noch optimiert werden können. Die Art und Weise, wie solche Sollströme durch die Stromvorgabeeinrichtung vorgegeben werden, ist grundsätzlich bekannt und bspw. in dem Patent EP 3 676 953 B1 beschrieben.

Die Stromvorgabeeinrichtung 400 kann in der Ansteuereinheit 244 der Figur 2 bzw. 344 der Figur 3 implementiert sein.

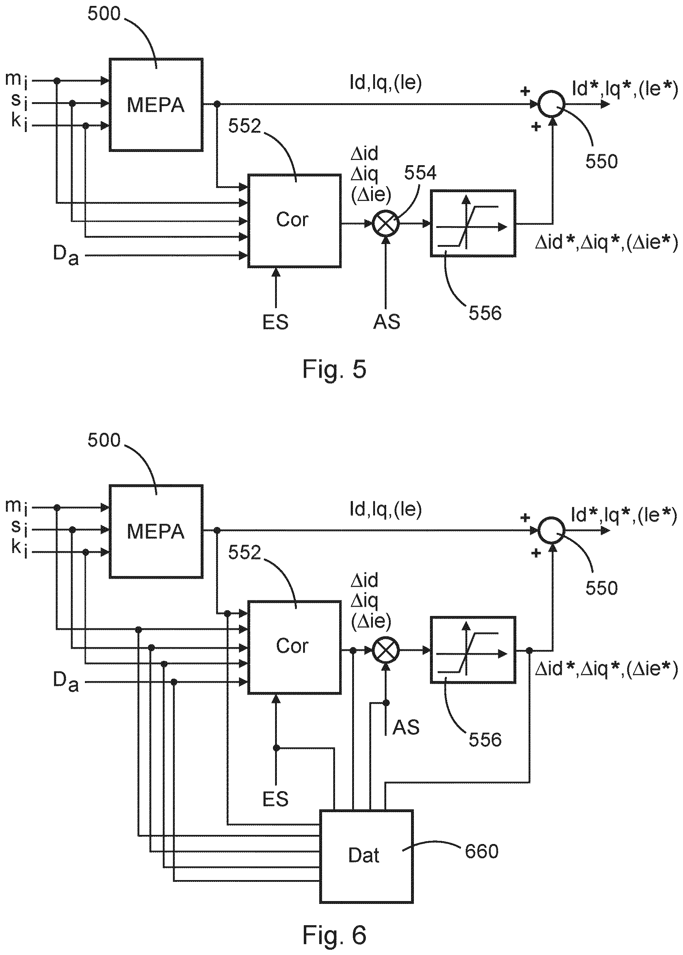

**Figur 5** zeigt eine Stromvorgabeeinrichtung 500, die der Stromvorgabeeinrichtung 400 der Figur 4 entsprechen kann und vereinfacht und synonym als MEPA bezeichnet werden kann. Die Stromvorgabeeinrichtung 500 erhält somit Eingangsmessgrößen mi, Eingangssteuersignale sᵢ und Eingangsparameter kᵢ, die zusammenfassend als Eingangsgrößen der Stromvorgabeeinrichtung bezeichnet werden können. Das gilt nicht nur für die Ausführung gemäß Figur 5, sondern ganz generell für jegliche Aspekte. Davon abhängig gibt die Stromvorgabeeinrichtung 500 Ausgangssollgrößen aus, nämlich die vorläufigen Stromsollgrößen I_{d}, I_{q} und ggf. Iₑ, auf die an der Summierstelle 550 Korrekturwerte Δid*, Δiq* und, falls die Stromvorgabeeinrichtung 500 auch einen Erregerstrom Iₑ vorgegeben hat, Δie* aufaddiert werden. Das Ergebnis sind die modifizierten Stromsollwerte Id*, Iq* und ggf. le*, die auch als angepasste Sollgrößen bezeichnet werden können.

Zum Bestimmen der Korrekturwerte ist eine Anpassungseinrichtung 552 vorgesehen. Die Anpassungseinrichtung 552 erhält dazu die vorläufigen Stromsollgrößen, die die Stromvorgabeeinrichtung 500 ausgibt. Weiterhin erhält die Anpassungseinrichtung 552 alle Eingangsgrößen der Stromvorgabeeinrichtung 500. Darüber hinaus können weitere Daten Da in die Anpassungseinrichtung 522 eingegeben werden.

Davon abhängig bestimmt die Anpassungseinrichtung 552 noch unbegrenzte Korrekturwerte Δid, Δiq und gegebenenfalls Δie. Diese Korrekturwerte sind entsprechend zum Korrigieren bzw. Modifizieren der Stromsollwerte vorgesehen. Sie können bspw. im Bereich von 1 - 20 % des Wertes des entsprechenden vorläufigen Stromsollwertes liegen, den sie korrigieren bzw. modifizieren sollen. Entsprechend ist Δid bzw. Δid* zum Korrigieren der d-Komponente I_{d} des vorläufigen Stromsollwertes vorgesehen und entsprechend Δiq bzw, Δiq* zum Korrigieren der q-Komponente I_{q} des vorläufigen Stromsollwertes und ebenfalls entsprechend, falls ein fremderregter Synchrongenerator verwendet wird, ist Δie bzw. Δie* zum Korrigieren des vorläufigen Stromsollwertes des Erregerstroms Iₑ vorgesehen.

Diese unbegrenzten Korrekturwerte Δid, Δiq und gegebenenfalls Δie werden auf das Multiplizierglied 554 gegeben, um dort mit einem Aktivierungssignal AS multipliziert zu werden. Das Aktivierungssignal ist insbesondere als eines vorgesehen, das nur den Wert 1 oder 0 annehmen kann, sodass eine vollständige Aktivierung erfolgt, wenn das Aktivierungssignal AS den Wert 1 annimmt, anderenfalls das Aufschalten der Korrekturwerte deaktiviert wird. Grundsätzlich kommt auch in Betracht, dass das Aktivierungssignal Werte zwischen 0 und 1 annimmt und dadurch eine teilweise Aktivierung oder eine Gewichtung vorgenommen werden kann. In diesem Fall kann es vorteilhaft sein, dass für die Korrekturwerte das Aktivierungssignal unterschiedliche Werte aufweist, um dadurch die Korrekturwerte einzeln und dadurch gegebenenfalls unabhängig voneinander in ihrer Größe zu beeinflussen.

Wenn das Aktivierungssignal AS den Wert 1 aufweist, werden dadurch die Korrekturwerte Δid, Δiq und gegebenenfalls Δie an einen Begrenzer 556 weitergegeben. Durch den Begrenzer wird sichergestellt, dass die Korrekturwerte, die an der Summierstelle 550 aufaddiert werden, nicht zu groß werden und dadurch nicht zu dominant in den Arbeitspunkt eingreifen, der durch die Stromsollwerte vorgegeben wird. Auch wird vermieden, dass fehlerhaft große Korrekturwerte aufgeschaltet werden und einen sinnvollen Arbeitspunkt gefährden. Der Begrenzer kann bspw. dem Betrage nach jeweils auf 10 % der Stromsollwerte gesetzt werden. Hier können entweder die jeweils aktuell von der Stromvorgabeeinrichtung 500 ausgegebenen vorläufigen Stromsollwerte verwendet werden, oder es können Nennwerte der jeweiligen ausgegebenen vorläufigen Stromsollwerte verwendet werden. Entsprechend kommt auch in Betracht, dass der Begrenzer 556 für die unterschiedlichen Komponenten unterschiedliche Begrenzungsamplituden aufweist.

Insoweit ist der Begrenzer 556 auch so zu verstehen, dass er repräsentativ für drei (oder zwei) einzelne Begrenzer steht, die nämlich jeweils eine Amplitude der Korrekturwerte begrenzt. Dadurch können für die unterschiedlichen Korrekturwerte unterschiedliche Begrenzungen angesetzt werden. Besonders kann für den Erregerstrom eine andere Begrenzung als für die d-Komponente und q-Komponente vorgesehen sein.

Die Anpassungseinrichtung 552 ist insbesondere selbstlernend ausgebildet. Dadurch können umfangreiche Systemstudien entbehrlich sein, die andernfalls zur Verbesserung entsprechender Algorithmen in der Anpassungseinrichtung 552 benötigt werden würden. Dabei ist zu beachten, dass die vorläufigen Stromsollwerte, die die Stromvorgabeeinrichtung 500 ausgibt, bereits ohne Modifizierung einen guten Arbeitspunkt einstellen können. Zu Beginn des Betriebs bzw. zu Beginn des Anlernens der Anpassungseinrichtung 552 kann diese bspw. als Korrekturwerte nur die Größe 0 ausgeben. Von dieser Situation aus startend können diese Korrekturwerte nach und nach verändert werden und es kann das Resultat, insbesondere ein resultierender Wirkungsgrad des angesteuerten Generators, bewertet werden.

Das Anlernen kann besonders so erfolgen, dass das Aktivierungssignal AS regelmäßig, z. B. im Abstand von 30 Sekunden, zwischen 0 und 1 wechselt, sodass immer abwechselnd die Korrekturwerte an der Summierstelle 550 aufgeschaltet oder nicht aufgeschaltet werden. Dann können Vergleiche gezogen werden mit der Bewertungsgröße, also bspw. dem Wirkungsgrad, für den Fall, dass keine Korrekturwerte aufgeschaltet wurden, mit dem Fall, dass Korrekturwerte aufgeschaltet wurden. Daraus kann abgeleitet werden, ob die Korrekturwerte eine Verbesserung erreicht haben. In dem Fall können sie weiter verändert werden, um zu prüfen, ob eine noch weitere Verbesserung in Betracht kommt. Anderenfalls können sie zurückgeändert werden, sollte sich keine Verbesserung oder eine Verschlechterung ergeben haben.

All dies ist besonders als anschauliche Erklärung zu verstehen und vorzugsweise können beim Anlernen auch quantitative Zusammenhänge erkannt werden, aus denen auch abgeleitet werden kann, welche Korrekturwerte zu was für einer Verbesserung führt, also insbesondere der Höhe nach.

Auf diese Art und Weise kann nach und nach die Anpassungseinrichtung 552 bzw. eine darin verwendete Anpassungsvorschrift angelernt werden. Dieses Anlernen kann im laufenden Betrieb fortgesetzt werden.

Außerdem kann in die Anpassungseinrichtung 552 ein Bewertungssignal ES eingegeben werden, das wie beschrieben zur Bewertung verwendet werden kann. Es kann bspw. ein aktuell erfasster Wirkungsgrad des Generators sein, oder ein aktuell erfasstes Verlustleistungsmaß.

**Figur 6** zeigt eine ganz ähnliche Struktur wie in Figur 5 und kann die gleichen oder dieselben Elemente verwenden, soweit sie die gleichen Bezugszeichen haben. In Figur 6 ist ein Zusatzmodul 660 hinzugekommen, das zum Offline-Anlernen verwendet werden kann. Dieses Zusatzmodul kann im Wesentlichen eine Datenspeicherung beinhalten, die im Grunde sämtliche Eingangswerte der Anpassungseinrichtung 552 aufnimmt und speichert, zusammen mit den dazu ausgegebenen Korrekturwerten, zusammen mit einem Wert des Aktivierungssignals AS und zusammen mit den begrenzten Korrekturwerten Δid*, Δiq* und Δie*, soweit vorhanden. Dadurch können diese Werte über die Zeit aufgenommen, abgespeichert und dann bewertet werden.

Für die Bewertung kann zusätzlich eine Bewertungsgröße ES aufgenommen werden, bspw. ein aktuell erfasster Wirkungsgrad des zu steuernden Synchrongenerators. Auch hier kommt in Betracht, dass die Korrekturwerte durch das Aktivierungssignal AS mal aktiviert und mal deaktiviert werden, also mal aufgeschaltet werden und mal nicht aufgeschaltet werden.

Dadurch werden viele Daten erfasst, die ähnlich wie oben zu Figur 5 beschrieben statt online nun offline ausgewertet werden.

Die Lösungsidee lässt sich unter Bezugnahme auf Figur 5 folgendermaßen beschreiben:
- Die vorläufigen Stromsollwerte des Generatorarbeitspunkts, der durch I_{d}, I_{q} und Iₑ gegeben sein kann, werden durch eine Ermittlungseinheit, insbesondere unter Verwendung der Anpassungseinrichtung 552, jeweils um einen gewissen Korrekturwert Δid*, Δiq* und Δie* geändert.
- Zur Bestimmung der Korrekturwerte in der Anpassungseinrichtung 552, die auch als Korrekturermittlungseinheit bezeichnet werden kann, können Machine-Learning (z. B. ein künstliches neuronales Netz) oder auch weitere Verfahren verwendet werden.
- Die Eingänge der Anpassungseinrichtung 552 bzw. Korrekturermittlungseinheit können die Eingänge von MEPA, die Ausgänge von MEPA, und/oder weitere Daten beinhalten.
- Die Ausgänge der Anpassungseinrichtung 552 bzw. Ermittlungseinheit Δid, Δiq und Δie) können mit einem Aktivierungssignal AS multipliziert werden, welches sich zwischen 0 und 1 ändert, insbesondere abwechselnd in regelmäßigen Zeitintervallen, z. B. alle 30 s. Das ermöglicht den Korrekturvorgang zeitweise ein- oder auszuschalten.
- Die Zustandsgrößen im ausgeschalteten Korrekturvorgang können für die Bewertung der Korrekturwerte vor der Ausschaltung des Korrekturvorgangs verwendet werden, z. B. zum Training des Machine-Learnings in der Korrekturermittlungseinheit. Die Bewertung der Korrekturwerte kann online (während des Betriebs) auf einem Steuerrechner in der Windenergieanlage oder offline auf einem externen Rechner stattfinden. Für die Offline-Variante müssen alle Zustandsgrößen erst während des Betriebs erfasst und gespeichert werden, was im Zusammenhang mit der Figur 6 erläutert wurde.
- Infolge der Bewertung im vorherigen Schritt können Anpassungen in der Korrekturermittlungseinheit vorgenommen werden, um den Korrekturvorgang zu verbessern. Auch diese Anpassungen können online (während des Betriebs) oder offline (durch Software-Update) stattfinden.
- Der Umfang der Korrekturwerte lässt sich durch den Begrenzer 556 begrenzen.

Durch die vorgeschlagene Lösung sollen folgende Vorteile erreicht werden.
- Ertragssteigerung: Die Lösungsidee kann zur Ertragsteigerung im Einflussbereich von MEPA führen.
- Es wäre aber auch möglich, durch die Korrekturwerte ein abweichendes Ziel vorzugeben, als eine Optimierung oder reine Optimierung der Stromvorgabeeinrichtung. Bspw. können auch Modifizierungen zum Test oder zur Geräuschveränderung vorgenommen werden.
- Erkenntnisse für die Verbesserung von MEPA: Durch die Analyse der Korrekturwerte und deren Korrelation mit Eingangsgrößen können Erkenntnisse gewonnen werden, welche zum einen zur Verbesserung des Modells in MEPA, also zur Verbesserung eines in der Stromvorgabeeinrichtung zur Bestimmung der vorläufigen Stromsollwerte verwendeten Modells, und zum anderen zum besseren Verständnis der Alterungs- oder weiteren bisher unbekannten Phänomene dienen.

## Patentansprüche

1. Verfahren zum Steuern eines Synchrongenerators einer Windenergieanlage, wobei
- zum Ansteuern des Synchrongenerators vorläufige Stromsollwerte mittels einer Stromvorgabeeinrichtung zum Einstellen eines vorläufigen Arbeitspunktes vorgegeben werden,
- die von der Stromvorgabeeinrichtung vorgegebenen vorläufigen Stromsollwerte durch Korrekturwerte in modifizierte Stromsollwerte verändert werden, um den vorläufigen Arbeitspunkt zu optimieren, wobei
- eine Anpassungseinrichtung die Korrekturwerte durch eine Anpassungsvorschrift der Anpassungseinrichtung bestimmt, und
- die modifizierten Stromsollwerte zum Ansteuern des Synchrongenerators verwendet werden, um einen modifizierten Arbeitspunkt einzustellen.

2. Verfahren nach Anspruch 1, **dadurch gekennzeichnet, dass**
die von der Stromvorgabeeinrichtung vorgegebenen vorläufigen Stromsollwerte ohne Veränderung durch die Korrekturwerte zum Ansteuern des Synchrongenerators geeignet sind, um den vorläufigen Arbeitspunkt einzustellen.

3. Verfahren nach Anspruch 1 oder 2, **dadurch gekennzeichnet, dass**
- die Stromvorgabeeinrichtung in Abhängigkeit von
- wenigstens einer Eingangsmessgröße, und/oder
- wenigstens einer Eingangssteuergröße und/oder
- wenigstens einem Eingangsparameter
- die vorläufigen Stromsollwerte über ein Optimierungsverfahren bestimmt und ausgibt.

4. Verfahren nach einem der vorstehenden Ansprüche, **dadurch gekennzeichnet, dass**
- die Stromvorgabeeinrichtung wenigstens eine d-Komponente I_{d} und eine q-Komponente I_{q} im Sinne einer d/q-Transformation als vorläufige Stromsollwerte für einen dreiphasigen Generatorstrom vorgibt, wobei optional
- durch die Stromvorgabeeinrichtung zusätzlich wenigsten ein Erregerstromsollwert als Teil der vorläufigen Stromsollwerte vorgegeben wird, wenn der Synchrongenerator ein fremderregter Synchrongenerator ist.

5. Verfahren nach einem der vorstehenden Ansprüche, **dadurch gekennzeichnet, dass**
- die vorläufigen Stromsollwerte durch Aufaddieren der Korrekturwerte in die modifizierten Stromsollwerte verändert werden.

6. Verfahren nach einem der vorstehenden Ansprüche, **dadurch gekennzeichnet, dass**
- die Anpassungseinrichtung die Korrekturwerte in Abhängigkeit von
- Eingangsgrößen der Stromvorgabeeinrichtung, und/oder
- den vorläufigen Stromsollwerten und optional
- weiteren Eingangsgrößen
bestimmt.

7. Verfahren nach einem der vorstehenden Ansprüche, **dadurch gekennzeichnet, dass**
- die Anpassungseinrichtung selbstlernend ausgebildet ist, und
- das Selbstlernen so erfolgt, dass die Anpassungsvorschrift so verändert wird, dass eine Bewertungsgröße optimiert wird, insbesondere ein Wirkungsgrad maximiert oder ein Verlustmaß minimiert wird.

8. Verfahren nach einem der vorstehenden Ansprüche, **dadurch gekennzeichnet, dass**
- zum Selbstlernen der Anpassungseinrichtung
- Korrekturwerte und/oder Einstellungen der Anpassungsvorschrift variiert werden,
- Anpassungseingangsgrößen, als Eingangsgrößen der Anpassungseinrichtung, aufgenommen werden,
- wenigstens eine bzw. die zu optimierende Bewertungsgröße aufgenommen wird, und
- die variierten Korrekturwerte bzw. Einstellungen der Anpassungsvorschrift in Bezug auf die aufgenommene Bewertungsgröße bewertet werden, und
- als erlernte Korrekturwerte und/oder als erlernte Einstellungen der Anpassungsvorschrift solche gewählt werden, die zu einer verbesserten, insbesondere optimierten Bewertungsgröße geführt haben, wobei insbesondere
- das Selbstlernen basierend auf einer bereits erlernten Anpassungsvorschrift wiederholt wird, um die bereits erlernte Anpassungsvorschrift weiter zu verbessern.

9. Verfahren nach einem der vorstehenden Ansprüche, wobei als Anpassungsvorschrift ein künstliches neuronales Netz verwendet wird.

10. Verfahren nach einem der vorstehenden Ansprüche, **dadurch gekennzeichnet, dass**
- das Verändern der vorläufigen Stromsollwerte in die modifizierten Stromsollwerte, insbesondere ein bzw. das Aufaddieren der Korrekturwerte auf die vorläufigen Stromsollwerte, zeitweise und/oder abwechselnd durch ein Aktivierungsmittel aktiviert und deaktiviert wird und insbesondere
- Arbeitspunkte mit aktiviertem und deaktiviertem Verändern der vorläufigen Stromsollwerte verglichen und bewertet werden, um die Anpassungseinrichtung anzulernen bzw. zu adaptieren.

11. Verfahren nach einem der vorstehenden Ansprüche, **dadurch gekennzeichnet, dass**
- die Korrekturwerte mittels einer Begrenzungseinrichtung begrenzt werden, um das Verändern der vorläufigen Stromsollwerte zu begrenzen.

12. Verfahren nach einem der vorstehenden Ansprüche, **dadurch gekennzeichnet, dass** als Synchrongenerator ein Synchrongenerator einer getriebelosen Windenergieanlage gesteuert wird.

13. Windenergieanlage mit einem Synchrongenerator und die Windenergieanlage ist dazu eingerichtet, ein Verfahren zum Steuern des Synchrongenerators durchzuführen, wobei das Verfahren so arbeitet, dass
- zum Ansteuern des Synchrongenerators vorläufige Stromsollwerte mittels einer Stromvorgabeeinrichtung zum Einstellen eines vorläufigen Arbeitspunktes vorgegeben werden,
- die von der Stromvorgabeeinrichtung vorgegebenen vorläufigen Stromsollwerte durch Korrekturwerte in modifizierte Stromsollwerte verändert werden, um den vorläufigen Arbeitspunkt zu optimieren, wobei
- eine Anpassungseinrichtung die Korrekturwerte durch eine Anpassungsvorschrift der Anpassungseinrichtung bestimmt, und
- die modifizierten Stromsollwerte zum Ansteuern des Synchrongenerators verwendet werden, um einen modifizierten Arbeitspunkt einzustellen.

14. Windenergieanlage nach Anspruch 13, **dadurch gekennzeichnet, dass**
- die Windenergieanlage eine Anlagensteuerung aufweist und
- die Windenergieanlage, insbesondere die Anlagensteuerung dazu vorbereitet ist, ein Verfahren gemäß wenigstens einem der Ansprüche 1 bis 12 auszuführen.

15. Windenergieanlage nach Anspruch 13 oder 14, **dadurch gekennzeichnet, dass**
- die Windenergieanlage getriebelos ausgebildet ist.
